# EUROPEAN PATENT APPLICATION

(11) **EP 0 596 600 A1**
(43) Date of publication of application: **11.05.1994**
(21) Application number: 93307318.1
(22) Date of filing: 16.09.1993
(51) Int. Cl.: G01M 11/04, G01J 3/453, B23B 3/12

(54) **Base plate unit for fourier transform infrared spectrometers and the like**

(30) Priority: 06.11.1992 US 973149
(71) Applicant: NICOLET INSTRUMENT CORPORATION, Madison, WI 53711-4495 (US)
(72) Inventor: Zerbel, Allen J., Madison, Wisconsin 53716 (US)
(74) Representative: Senior, Alan Murray

(57) **Abstract**

A base plate unit for infrared spectrometers and the like includes a series of lightweight components which are combined to provide great rigidity. A light weight but rigid channel core is adhered to a vibration dampening layer which, in turn, is adhered to a pan to form a sandwich with the vibration dampening layer firmly affixed between the pan and the channel core. This configuration reduces the transmission of high frequency vibrations produced by machinery or loud noise to the pan. The channel core includes walls defining internal channels, preferably hexagonal in cross-sectional shape, thus allowing the channel core to achieve very high structural rigidity with minimum weight. The pan has a substantially planar top with skirts which depend from each of its edges to provide added rigidity. A series of bores and fastener casings are embedded in the pan and the channel core to allow mounting of various optical components to the base plate unit.

## Description

### FIELD OF THE INVENTION

This invention pertains generally to the field of optical systems and base plate assemblies therefor, and particularly to base plate assemblies for supporting precision instruments such as the optical components used in Fourier transform infrared spectrometers.

### BACKGROUND OF THE INVENTION

In a Fourier transform infrared spectrometer (FTIR spectrometer), various precision optical components are used to direct an infrared beam provided from an infrared source along a path which passes through an interferometer, the sample to be tested, and then to a detector. Focusing mirrors (e.g., parabolic, elliptical, spherical, hyperbolic, and aspherical) are used in such spectrometers to transfer images from one position to another along an axis at a desired magnification, and flat mirrors are used to change the direction of the infrared beam. The precise location of the mirrors, as well as the other components, are important to properly focus, collimate, or refocus the infrared beam through all parts of the spectrometer. The precise maintenance of location for the various components is typically accomplished by mounting them to a heavy, solid base plate.

A conventional base plate is made from a solid plate of metal, such as cast aluminum. The metal plate is then machined smooth on one side and bores are machined through this smooth surface into the metal base plate. The bores may be threaded to facilitate mounting of the various optical components.

The conventional FTIR spectrometer base plate has several disadvantages and limitations. First, a cast aluminum base plate often weighs between 50 and 70 pounds, contributing a significant portion of the total weight of the spectrometer, which is typically very heavy and awkward to carry. This weight is especially detrimental when the spectrometer must be used at different sites in the field. Often, for instance, water samples must be tested at separate sites and it is more efficient to move the spectrometer from site to site. However, the heavy weight of the spectrometer, due in part to a heavy base plate, renders such movement of the spectrometer difficult, particularly if only one technician is using the instrument.

Solid base plates are also relatively expensive. The weight of cheaper materials, such as steel, is prohibitive, so lighter materials with a high degree of rigidity, such as aluminum, are used. However, such strong, lightweight materials are often costly, adding to the overall expense of the infrared spectrometer. Additionally, machining such materials is relatively time consuming and costly. Also, vibrations occurring in the process plant or in other industrial applications are readily transmitted through solid metal base plates to the optical components. This can result in misalignment of the mirrors and less accurate results.

### SUMMARY OF THE INVENTION

In accordance with the present invention, a base plate unit for optical systems, such as FTIR spectrometers, has a lightweight construction but retains the rigidity necessary to maintain precision optical components in their exact location for optimal accuracy.

The base plate unit comprises a channel core having a generally planar top and bottom and preferably four sides. The channel core has a thin sheet metal layer or skin disposed at the top and a thin sheet metal layer or skin disposed at the bottom. Affixed between the skins is a center core which has a metal mesh defining a plurality of channels extending through the center core. Preferably, the channels extend generally perpendicular to the skins so that they will provide a lightweight core while retaining great rigidity. The binding of the center core to the skin on top and bottom yields a light weight but very rigid structure.

A vibration dampening layer is preferably adhered to the top skin and may have a pressure sensitive adhesive top surface. A generally planar pan is disposed in parallel alignment with the channel core and pressed against the pressure sensitive adhesive surface so that the channel core, vibration dampening layer, and pan are affixed together in a layered relationship to form the base plate unit. Other means may also be used to secure the pan and channel core together.

The unitary channel core and the pan are preferably made of a lightweight and strong material such as aluminum, while the vibration dampening layer is preferably made from a plastic type material which is a poor transmitter of vibrations from the channel core to the pan. For instance, when an FTIR spectrometer is used in a room where heavy machinery is running, high frequency vibrations are often transmitted to the base plate assembly. However, by properly selecting the material of the vibration dampening layer and fixing this layer between the channel core and the pan, such vibrations are substantially dampened or not transmitted to the pan by the vibration dampening layer.

To mount the optical components, holes or bores are included in the base plate unit. Typically, the bores are formed through the pan and extend at least partially through the unitary channel core. Where necessary, fastener casings are affixed in the bores. The fastener casings preferably include internally threaded regions so that the various optical instruments may be screwed tightly to the base plate.

Further objects, features and advantages of the invention will be apparent from the following detailed description when taken in conjunction with the accompanying drawings.

### BRIEF DESCRIPTION OF THE DRAWINGS

In the drawings:
Figure 1 is a schematic top view of the base plate unit of the invention with illustrative optical elements shown thereon;
Figure 2 is a perspective view of the base plate unit;
Figure 3 is a cross-sectional view of the base plate unit taken generally along line 3-3 of Figure 2; and
Figure 4 is an exploded view showing the channel core, the vibration dampening layer, and the pan in position for assembly.

### DETAILED DESCRIPTION OF THE INVENTION

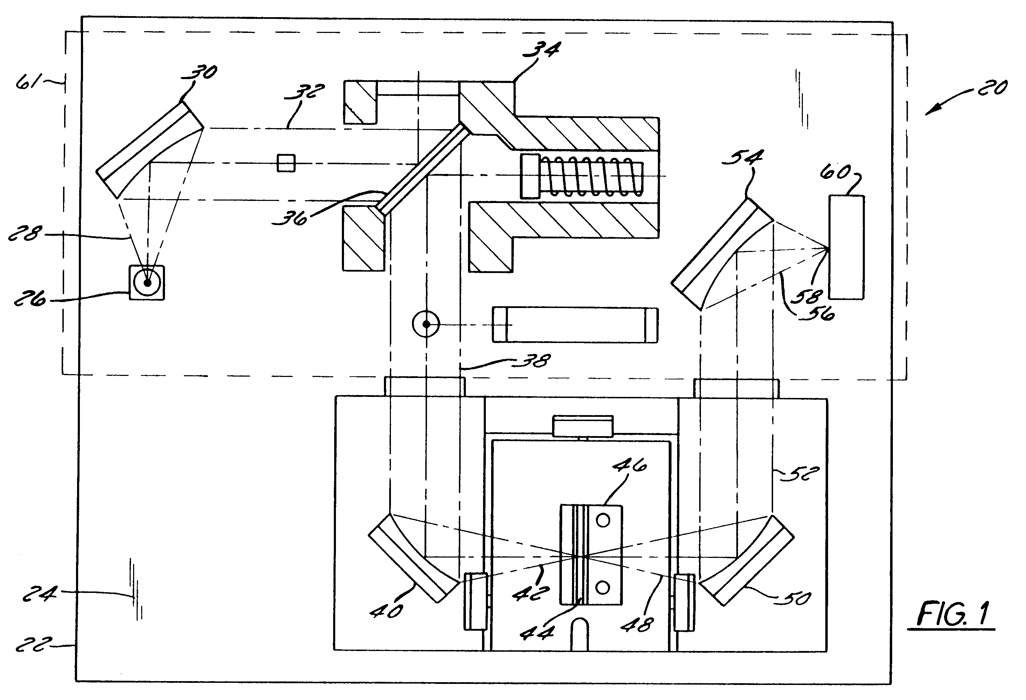

With reference to the drawings, a simplified top view of an infrared spectrometer incorporating the invention is shown generally at 20 in Figure 1. The optical system for the spectrometer may be configured in various ways which are conventional in infrared spectrometers, particularly Fourier transform infrared spectrometers, as well as in other optical systems. The optical layouts to be described below are for illustrative purposes only. It will be apparent to those skilled in the art that various other configurations can be utilized and that the base plate unit of the invention may be used in optical systems other than spectrometers.

The infrared spectrometer 20 has a base plate unit 22 with a flat top surface 24 which provides the mounting surface for the various optical components. These optical components include an infrared source 26 which may be of any type that provides an infrared beam 28 of the desired wavelengths. The beam is typically a diverging beam as illustrated. The infrared beam 28 is intercepted by a collimating mirror 30 which redirects a collimated beam 32 to an interferometer 34 which has a beam splitter 36. The interferometer 34 provides a modulated output beam 38. The manner of operation and purpose of the interferometer 34 are well known, and the interferometer may be a Michelson type interferometer.

The modulated output beam 38 of the interferometer 34 is intercepted by a focusing mirror 40 which provides a focused beam 42 that impinges on a sample 44 held in a sample holder 46. The diverging beam 48 which is passed through the sample is intercepted by a collimating mirror 50 which provides a collimated output beam 52. The collimated beam 52 is intercepted by a focusing mirror 54 which focuses a reflected beam 56 onto a detector target area 58 of an infrared detector system 60.

The above described infrared spectrometer is set forth for illustrative purposes only, it being understood that many other layouts for spectrometers may be utilized with the present invention. To accommodate certain configurations, the base plate 22 may even be split into different sections. For instance, the base plate 22 could be split to include an accessory compartment for mounting the focusing mirror 40, sample holder 46 and collimating mirror 50 separately from the remaining components shown in the dashed box labeled 61.

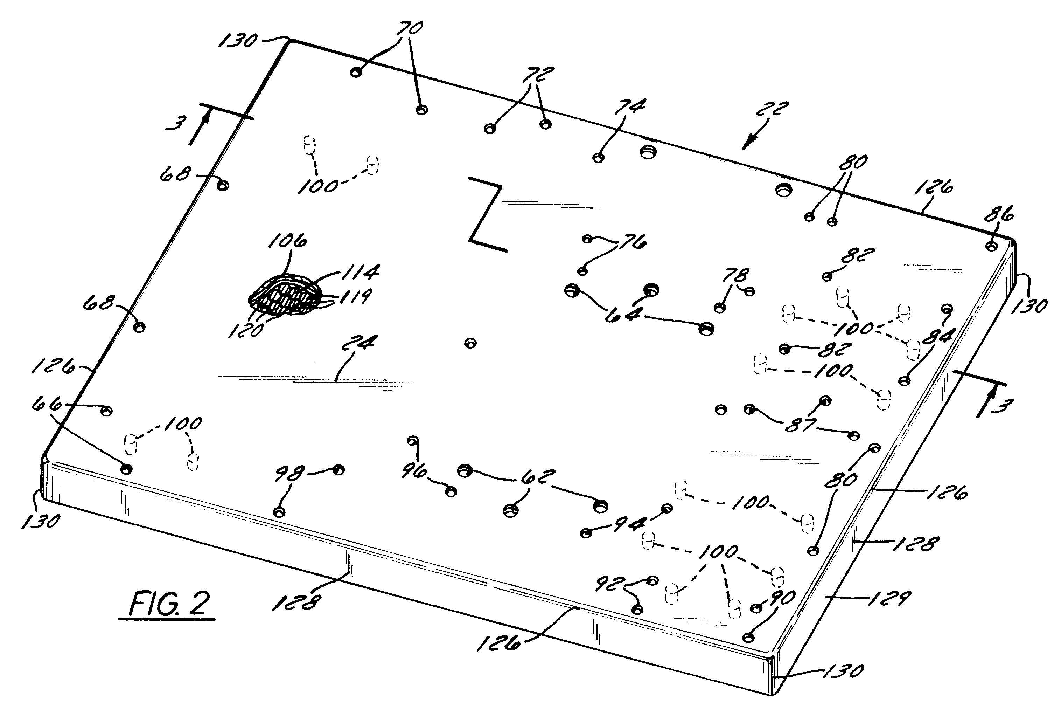

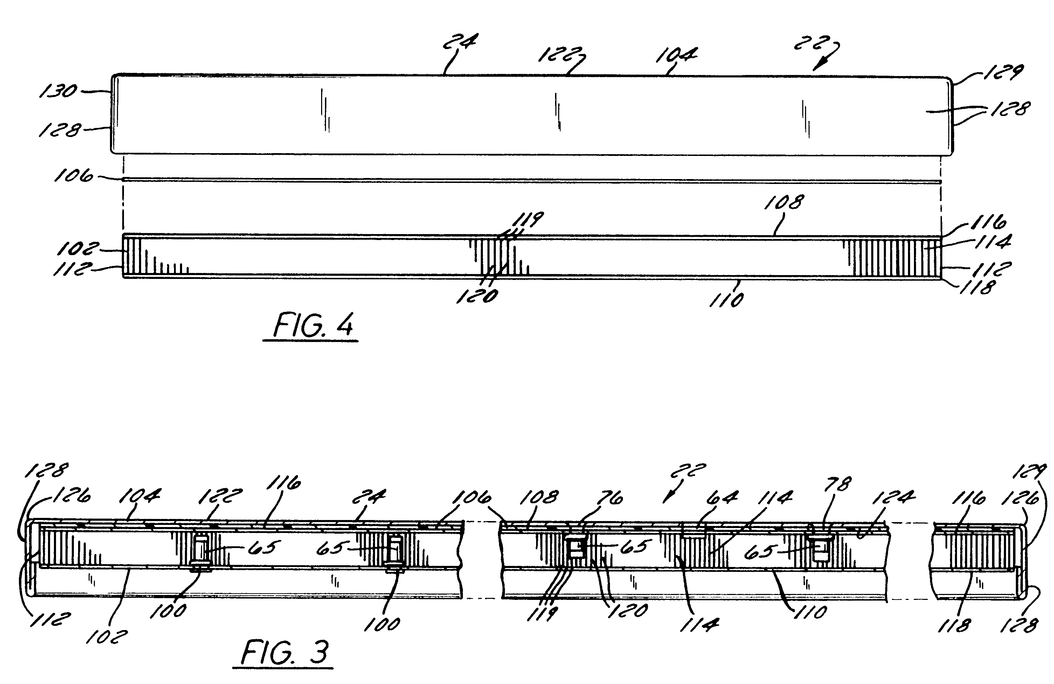

Referring now generally to Figures 2 and 3, the construction of the base plate unit 22 is illustrated. The base plate 22 includes a plurality of bores for the attachment of optical instruments. The arrangement will vary depending on the optical instrument, and may freely be adapted to various configurations of instruments without departing from the scope of the invention. An example of a possible arrangement of bores is shown in Figure 2 where a series of locator bores 62 and 64 are formed at least part way through the base plate 22. Most of the remaining bores are threaded securement bores which are also formed at least partially through the base plate 22, and preferably each includes an embedded fastener casing 65 (shown in Figure 3), such as a Rivnut® manufactured-by B.F. Goodrich Co. Each of the embedded fastener casings may contain internal threads by which the various optical components may be mounted. When the preferred Rivnut casings are used, a single Rivnut casing is placed in each bore and then expanded to engage and deform the channel walls to create an interference fit with the walls so that the casing becomes firmly affixed within the channel core.

A pair of bores with their respective embedded fastener casings are shown in the lower left-hand corner of the base plate unit and are designated generally as 66. Moving clockwise around the top of the base plate unit 22, a second pair of bores and their respective casings are designated as 68 followed by a third pair designated as 70, a fourth pair designated as 72, and a single bore with its respective casing designated as 74. Disposed generally about the locator bores 64 is a first pair of bores and their respective casings 76 as well as a second pair 78. Continuing in a generally clockwise direction, there is shown a pair of locator bores 79, a pair of bores and respective casings 80, a second pair 82, a third pair 84, and a single bore and casing in the upper right-hand corner designated as 86. Further, a set of three bores and casings is designated as 87 followed by a pair 88, and a set of pairs 90 and 92, respectively, shown in the lower right-hand corner. Locator holes 62 are surrounded by a first pair 94, a second pair 96, and a more distant pair 98. Appropriate bores and embedded casings are also used in the bottom side of base plate 22 for mounting brackets or legs (not shown) to the base plate when necessary. These bores are designated generally as 100.

The base plate unit 22 generally comprises a lightweight channel core 102, a pan 104, and a vibration dampening layer 106. The vibration dampening layer 106 is disposed between the pan 104 and the unitary channel core 102 and preferably is adhesive on each of its sides to combine the components into the rigid base plate unit 22.

The channel core 102 includes a top 108, a bottom 110, and sides 112. Preferably, the channel core 102 is a quadrilateral with four sides 112. The channel core 102 further includes a flat center core 114 bounded on its top and bottom by a first skin 116 and a second skin 118 of thin sheet metal. The skins 116 and 118 are generally planar and are rigidly affixed to the center core 114 in a conventional manner. The center core 114 includes a mesh of thin metal walls 199 defining a plurality of channels 120 which extend through the center core between the first skin 116 and the second skin 118, preferably perpendicularly to the skins. The channels 120 may be of a variety of cross-sectional shapes, although a hexagonal shape is preferred. In the exemplary structure shown, the center core 114 has a generally honeycomb construction with the walls 119 defining a plurality of hexagonal channels 120 extending therethrough.

The center core 114, as well as the skins 116 and 118, should be made from a material that is relatively lightweight and strong, such as aluminum. A suitable commercially available channel core having a general honeycomb construction and made from aluminum is manufactured by Plascore Incorporated, Zeeland, Michigan, and may be purchased under the trade name Plascore.

The vibration dampening layer 106 is adhered to the upper surface 108 of the first skin 116. Preferably, the dampening layer 106 is a plastic material, such as a solid acrylic film adhesive, preferably about 0.02 inch thick, which is pressure sensitive on both of its sides, and is also commercially available from Plascore Incorporated, disposed to contact the pan 104 and the channel core 102 to join the two. The layer 106 provides a dampening of vibrations and tends not to transmit vibrations, especially high frequency vibration, from the channel core to the pan because of the nature of the material of the layer. A base plate used in environments with running machinery or extreme noise will often be induced to vibrate from the high frequency vibrations generated by the machinery or the sound. The plastic vibration dampening layer 106 between the pan 104 and the channel core 102 substantially dampens any vibration induced in the base plate unit 22 because it is a poor conductor of vibrational energy. A variety of materials may be used as the dampening layer, provided that the material is a significantly poorer transmitter of high frequency vibrations (or absorbs such energy) than the metal of the pan and the channel core. A variety of organic plastics or elastomers may be used.

The pan 104 is disposed in generally parallel alignment with the top surface 108 of the channel core 102 and is preferably made from a sheet metal, such as aluminum. The pan 104 includes a planar top surface 122, a planar bottom surface 124, and a plurality of (preferably four) edges 126. The bottom surface 124 is adhered to the vibration dampening layer 106. As illustrated, the pan 104 may include a plurality of skirts 128. Each skirt 128 depends from one of the edges 126 so that in the preferred embodiment four skirts 128 depend from the four edges 126. Each skirt 128 is disposed generally perpendicularly to the bottom surface 124 and extends downwardly towards and preferably past the second skin 118 of the channel core 102. Thus, the four skirts 128 form a quadrilateral shroud 129 which completely conceals the unitary channel core 102 when viewed from the side. By affixing each skirt to its adjacent skirt at each corner 130 by methods which are known in the art, such as by welding, the pan is further rigidified.

Figure 4 shows an exploded view of the base plate unit 22. When assembled, the pan 104 is formed with the quadrilateral shroud 129 depending perpendicularly from its bottom surface 124. The vibration dampening layer 106 is then adhered to the top surface of the first skin 116. The pan 104 is then moved into proximity with the channel core 102 so that its bottom surface 124 may be pressed against the pressure sensitive adhesive surface of the dampening layer 106 to securely affix the unitary channel core 102, the vibration dampening layer 106, and the pan 104 into the integrated base plate unit 22. In this position, the skirts 128 extend past the sides of the unitary channel core 102, concealing its sides from view. This combination of the second skin 118, the center core 114, the first skin 116, the vibration dampening layer 106, and the pan 104 provides a lightweight base plate unit with both great rigidity and low susceptibility to high frequency vibration. Although not preferred, the pan may be affixed to the channel core in other ways than as described above. For example, a liquid, curable elastomer may be used between the bottom of the pan and the top skin of the channel core to secure the two and form the dampening layer. The pan may be mechanically secured to the channel core, as by external clamps or by the embedded screw casings which engage both the pan and the channel core. A non-adhesive dampening layer may then be used. In appropriate cases, the dampening layer may be omitted.

It is understood that the invention is not confined to the particular embodiments set forth herein as illustrative, but embraces all such modified forms thereof as come within the scope of the following claims.

## Claims

1. A base plate unit for optical systems such as a Fourier transform infrared spectrometer, comprising:
(a) a channel core including a top, a bottom, and a plurality of sides, the channel core further having a center core affixed between a first planar skin of sheet metal and a second planar skin of sheet metal, the center core having thin metal walls in a mesh extending between the first and second skins to define a plurality of channels, the channel core forming a light weight, rigid structure;
(b) a sheet metal pan disposed in generally parallel alignment with the first skin, the pan including a planar top surface, a planar bottom surface, and a plurality of edges; and
(c) means for rigidly affixing the pan to the channel core so that the channel core reinforces and rigidifies the pan.

2. The base plate unit of Claim 1 wherein the pan includes a plurality of skirts, each skirt depending from an edge of the pan and oriented generally perpendicularly to the bottom surface, and wherein each skirt is affixed to an adjacent skirt to provide the pan with greater rigidity.

3. The base plate unit of Claim 2 wherein the skirts extend beyond the second skin of the channel core.

4. The base plate unit of Claim 1 including a layer of vibration dampening material between and in contact with a skin of the channel core and the bottom surface of the pan.

5. The base plate unit of Claim 4 wherein the vibration dampening material is acrylic plastic adhered to the bottom surface of the pan and the skin of the channel core.

6. The base plate unit of Claim 1 wherein the plurality of channels of the channel core are disposed perpendicularly to the first skin and the second skin.

7. The base plate unit of Claim 1 wherein the pan, the center core, the first skin, and the second skin are formed of sheet aluminum.

8. The base plate unit of Claim 7 wherein the plurality of channels have a generally hexagonal honeycomb form.

9. The base plate unit of Claim 1 wherein the means for rigidly affixing the pan to the channel core includes a vibration dampening layer formed of a plastic sheet adhered to and between the bottom surface of the pan and a skin of the channel core.

10. The base plate unit of Claim 1 further comprising a plurality of fastener casings by which optical components may be mounted to the base plate unit, each casing embedded in the pan and the unitary channel core.

11. The base plate unit of Claim 10 wherein the fastener casings have lower sections which are expanded into holes in the channel core to engage and deform the channel walls.

12. A base plate unit for supporting optical components such as in a Fourier transform infrared spectrometer, comprising:
(a) a channel core having a top, a bottom, and four sides, the channel core including a planar sheet skin disposed at the top, a planar sheet skin disposed at the bottom, and a center core affixed between the skins and having walls in a mesh extending between the first and second skins to define a plurality of channels extending generally perpendicularly to the skins;
(b) a pan disposed in generally parallel alignment with the channel core, the pan having a planar top surface, a planar bottom surface, and four edges; and
(c) a vibration dampening layer adhered to one of the skins of the channel core and to the bottom surface of the pan to rigidly secure the pan to the channel core.

13. The base plate unit of Claim 12 wherein the pan, the sheet skins and the center core are sheet aluminum.

14. The base plate unit of Claim 12 wherein the plurality of channels have a hexagonal honeycomb form.

15. The base plate unit of Claim 12 wherein the pan includes four skirts, each skirt depending from an edge of the pan in a direction generally perpendicular to the bottom surface of the pan, the four skirts forming a quadrilateral shroud substantially covering the four sides of the channel core, and wherein each skirt is affixed to the next adjacent skirt at each corner point of the quadrilateral shroud to provide added rigidity.

16. The base plate unit of Claim 12 wherein the pan and channel core include a plurality of bores by which the optical components may be mounted to the base plate unit.

17. The base plate unit of Claim 16 further comprising fastener casings affixed in at least some of the plurality of bores by being expanded to engage and deform the channel walls.

18. The base plate unit of Claim 12 wherein the vibration dampening layer is an acrylic plastic sheet having adhesive surfaces.

19. A method for making a base plate unit on which may be mounted precision optical components, comprising the steps of:
(a) providing a channel core including a center core affixed between a bottom sheet metal skin and a top sheet metal skin, the center core having thin metal walls in a mesh defining a plurality of channels extending between the sheet metal skins:
(b) adhering a vibration dampening layer having pressure sensitive adhesive surfaces to the top sheet metal skin of the channel core; and
(c) adhering a pan to the vibration dampening layer pressure sensitive adhesive surface, the pan having a planar top surface, a planar bottom surface, and a plurality of edges, wherein the vibration dampening layer is sandwiched between the top skin of the channel core and the bottom surface of the pan to rigidly affix the pan to the channel core.

20. The method of Claim 19 further comprising the step of forming bores through the pan and into the channel core for mounting of optical components.

21. The method of Claim 20 further comprising the steps of placing expandable fastener casings into at least some of the bores and expanding the casings within their respective bores to engage and deform the channel walls to secure the casings in place.
